(19)

Europäisches
Patentamt
European
Patent Office
Office européen
des brevets

(11) **EP 2 348 000 A1**

(12) **EUROPEAN PATENT APPLICATION**

(43) Date of publication:
**27.07.2011 Bulletin 2011/30**

(21) Application number: **10151204.4**

(22) Date of filing: **20.01.2010**

(51) Int Cl.:
*C02F 5/00* $^{(2006.01)}$    *C02F 1/46* $^{(2006.01)}$
*C02F 1/44* $^{(2006.01)}$    *C02F 1/42* $^{(2006.01)}$
*C02F 1/24* $^{(2006.01)}$    *C02F 1/26* $^{(2006.01)}$
*C02F 1/28* $^{(2006.01)}$    *C02F 1/04* $^{(2006.01)}$
*C02F 1/467* $^{(2006.01)}$    *C25B 1/10* $^{(2006.01)}$
*C02F 1/461* $^{(2006.01)}$    *C02F 103/02* $^{(2006.01)}$

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**
Designated Extension States:
**AL BA RS**

(71) Applicant: **Nederlandse Organisatie voor
Toegepast
-Natuurwetenschappelijk Onderzoek TNO
2628 VK Delft (NL)**

(72) Inventors:
• **Bisselink, Roel Johannes Martinus
7038 EG Zeddam (NL)**
• **van Erkel, Joost
7314 CN Apeldoorn (NL)**
• **Kuipers, Norbertus Jozef Maria
7491 GS Delden (NL)**

(74) Representative: **Hatzmann, Martin et al
Vereenigde
Johan de Wittlaan 7
2517 JR Den Haag (NL)**

(54) **Method for treating an aqueous fluid**

(57)    The invention is directed to methods for treating an aqueous fluid comprising one or more electrolytes.

A method is provided according to which an aqueous fluid feed is supplied into an anode compartment of an electrochemical cell, where acidic aqueous fluid to be treated is generated. This acidic aqueous fluid is subjected to a treatment, after which treated acidic aqueous fluid is fed into a cathode compartment of the electrochemical cell, wherein treated aqueous fluid having a pH higher than the treated acidic aqueous fluid is generated. The anode compartment and cathode compartment are separated by an ion permeable separator, and the aqueous fluid feed has a pH in the range of 6-10 when entering the anode compartment.

A further method is provided according to which an aqueous fluid feed is supplied into an anode compartment of an electrochemical cell, where acidic aqueous fluid to be treated is generated. This acidic aqueous fluid is fed to a cathode compartment of the electrochemical cell, wherein aqueous fluid to be treated is generated having a pH higher than the acidic aqueous fluid to be treated. The aqueous fluid generated in the cathode compartment is subjected to a treatment. The anode compartment and cathode compartment are separated by an ion permeable separator.

A further method is provided according to which an aqueous fluid feed is supplied into a cathode compartment of an electrochemical cell, wherein alkaline aqueous fluid to be treated is generated. This alkaline aqueous fluid is subjected to a treatment, after which treated alkaline aqueous fluid is fed into an anode compartment of the electrochemical cell, wherein treated aqueous fluid having a pH lower than the treated alkaline aqueous fluid is generated. The anode compartment and cathode compartment are separated by an ion permeable separator, and the aqueous fluid feed has a pH in the range of 6-10 when entering the cathode compartment.

EP 2 348 000 A1

**Description**

The invention is directed to methods for treating an aqueous fluid comprising one or more electrolytes.

For many water treatments scaling is an undesirable phenomenon, which can cause a lot of problems. If the water that is being treated has dissolved ions, then mineral deposits can be formed once the solubility (limit) is exceeded, e.g. after evaporation of the water. Such mineral deposits are referred to in the context of this application as scale. The scale can clog equipment, cause undesirable slurry formation, etc. Such scale forming thereby, among others, lowers the efficiency and effectiveness of the water treatment, gives rise to higher energy consumption, and gives rise to frequent equipment maintenance. Particularly, in the case of continuous processes, this is disadvantageous because it necessitates regular maintenance stops. It will be evident that a reduction or avoidance of scale formation is highly desirable in many situations.

Conventionally, scaling is prevented by employment of anti-scaling agents. These typically contain acids such as acetic acid, lactic acid, citric acid, phosphoric acid, hydrochloric acid, and sulphamic acid to remove scale. The anti-scaling agents can further contain chelating agents (such as ethylenediaminetetraacetic acid or phosphonates) to prevent scale formation, and biocides (such as sorbic acid) to prevent the growth of micro-organisms and algae. Nonetheless, for many applications it is not desirable that the anti-scaling agents maintain in the water, because they give rise to chemical contamination. Hence, these anti-scaling agents often have to be removed after the treatment.

In view of the above, there remains a need for alternative methods by which scaling during specific water treatment can be prevented or reduced. Some efforts have been made in the prior art to fulfil this need.

US-A-2009/0 071 843 describes a method for scale prevention in which an electrolyte is circulated through one compartment of an electrolytic cell, while a raw water supply stream is run through the other compartment of the electrolytic cell, the two compartments being separated by an ion permeable diaphragm.

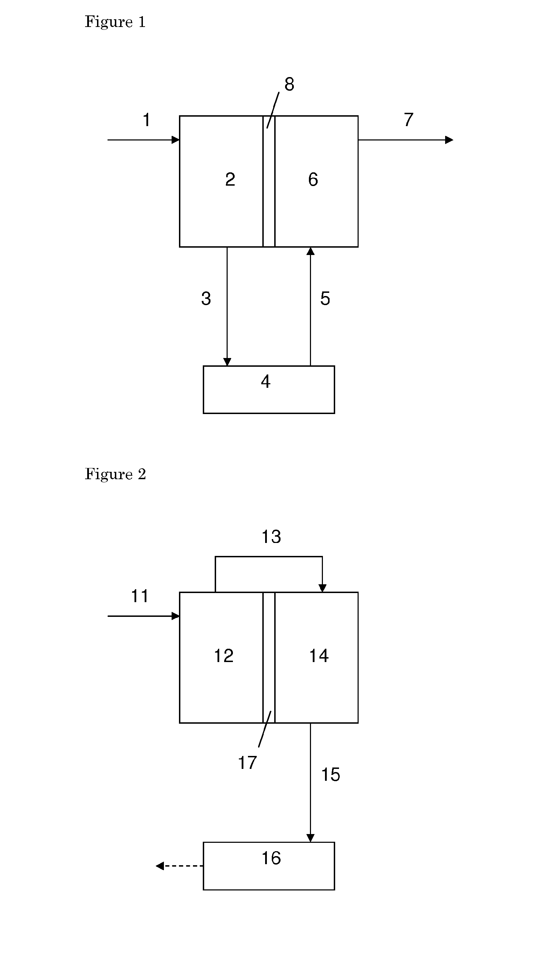

EP-A-0 839 762 describes a method and apparatus for scale prevention in producing deionised water. In the embodiment of Figure 2 of this document, acidic water is produced in the anode compartment of the electrolysis unit. The acidic water stream then enters a continuous deionization unit. Deionised acidic water is discharged, whereas concentrated acidic water is recycled to the electrolysis unit, supplemented with water from a water supply line. Hence, this water is acidic. The water supply for the electrolysis unit not only enters the anode compartment, but also the cathode compartment. A disadvantage thereof is that the product to waste ratio is rather low. A major part of the water supply directly enters the cathode compartment to form a water waste stream, whereas only a minor part exits the anode compartment to enter the electrodialysis unit, where the deionised product stream is formed.

In view of the prior art, there is room for improvement in reducing and/or preventing scale in industrial water treatment processes. One objective of the invention is therefore to provide a method for treating an aqueous fluid, wherein scaling is avoided or at least reduced.

The inventors found that this objective can be met by temporarily reducing the pH of an aqueous fluid to be treated in an electrochemical cell, and after the treatment raising the pH of the treated fluid in the same electrochemical cell in a specific manner.

The inventors further realised that temporarily reducing the pH of an aqueous fluid may be advantageous for many other processes or treatments that are not necessarily related to scaling. In any process or treatment where a temporary change in the pH of an aqueous fluid is required or desirable, the invention can be employed. Examples of such processes include biological and biochemical processes (e.g. the temporary change of pH may have a specific effect on the activity of certain bacteria or enzymes in the feed), chemical processes (e.g. pasteurisation, amino acid dissolution and dissociation, influencing colloid stability, influencing reaction rates, influencing zeta potentials, etc.), physical processes (storage, mixing, dispersing, stabilisation, transport, heat/cold transfer processes) and separation processes. For example, in separation processes the temporary change of pH can be exploited to optimise the performance of the separation step, whereas the change to the original pH can be utilised for the recovery of a mass-separating agent, thus integrating separation and recovery in a single electrochemical cell.

Accordingly, in a first aspect the invention is directed to a method for treating an aqueous fluid comprising one or more electrolytes, said method comprising:

- supplying at least part of an aqueous fluid feed to be treated into an anode compartment of an electrochemical cell, wherein at the anode water is oxidised to thereby generate an acidic aqueous fluid to be treated;
- subjecting at least part of the acidic aqueous fluid to be treated to a treatment, the treatment generating at least treated acidic aqueous fluid;
- feeding at least part of the treated acidic aqueous fluid into a cathode compartment of the same electrochemical cell, wherein at the cathode water is reduced to thereby generate a treated aqueous fluid that has a pH which is higher than the treated acidic aqueous fluid,

wherein the anode compartment and the cathode compartment of the electrochemical cell are separated by an ion permeable separator, and wherein the aqueous fluid feed has a pH in the range of 6-10, preferably in the range of 7-9, when entering the anode compartment.

In accordance with this aspect of the invention the pH of the aqueous fluid feed is temporarily decreased using an anode compartment of an electrochemical cell in order for the aqueous fluid to undergo a specific treatment wherein e.g. scaling is prevented or at least reduced. After the treatment, the pH of the treated aqueous fluid is raised using a cathode compartment of the same electrochemical cell. In order to prevent mixing of fluids in the electrochemical cell and at the same time maintaining electrical neutrality, the anode compartment and the cathode compartment are separated by an ion permeable separator.

This aspect of the invention is exemplified by the schematic picture in Figure 1. In this picture an aqueous fluid feed to be treated 1 is supplied into an anode compartment 2. Acidic aqueous fluid to be treated 3 exits the anode compartment 2 and is subjected to a treatment 4. After treatment 4, treated acidic aqueous fluid 5 is introduced into cathode compartment 6. Finally, treated aqueous fluid 7 having a pH higher than the treated acidic aqueous fluid 5 exits the cathode compartment 6. Anode compartment 2 and cathode compartment 6 are separated by ion permeable separator 8.

Advantageously, the amount of equipment needed for performing the method of the invention is minimal. Moreover, the invention allows aqueous fluid to be treated in a highly efficient and effective manner, whereby the pH is temporarily lowered e.g. in order to prevent scaling during the treatment. In addition, the composition of the aqueous fluid to be treated (concentration of minerals and organic substances) is not changed. Furthermore, in case the method of the invention is applied to prevent or reduce scale no addition of undesirable anti-scaling agents or water softeners is required. Also, no auxiliary water streams that inherently lead to additional waste streams are needed.

The invention can particularly advantageously be employed for reducing scale in humidifiers and cooling towers.

The term "aqueous fluid" as used in this application is meant to refer to any fluid that comprises water. Hence, the aqueous fluid can be water, but may also be any solution, suspension and/or dispersion that comprises water.

In accordance with this aspect of the invention and in contrast to the method as taught by EP-A-0 839 762, when entering the anode compartment of the electrochemical cell the aqueous fluid feed has a pH in the range of 6-10, preferably in the range of 7-9. Preferably, substantially no treated acidic aqueous fluid enters the anode compartment of the electrochemical cell. In an embodiment, this is 5 wt.% or less of the produced treated acidic aqueous fluid, more preferably 2 wt.% or less, even more preferably 1 wt.% or less. It is further preferred that substantially the entire aqueous fluid feed is supplied into the anode. In an embodiment, this is 95 wt.% or more of the aqueous fluid feed, preferably 98 wt.% or more, even more preferably 99 wt.% or more.

The aqueous fluid to be treated comprises one or more electrolytes. Suitably, the one or more electrolytes can be selected from the group consisting from dissolved salts, weak acids, weak bases and their dissociation products. The one or more electrolytes can, for instance, comprise one or more selected from a carbonate salt, a bicarbonate salt, a hydroxide salt, a halogenite, a hypochlorite ion, an oxide, a hydride, a sulphate salt, a bisulphate salt, a sulphite salt, a sulphide, a nitrate, a nitrite, hydrogen phosphate, dihydrogen phosphate and trihydrogen phosphate, cyanurate ions, actinide ions, hydrogen fluoride, hydrogen chloride, hypochlorous acid, hydrochloric acid, formic acid, acetic acid, propionic acid, cyanuric acid, benzoic acid, oxalic acid, ammonia, phenol or derivatives thereof. In a preferred embodiment, these one or more dissolved salts comprise a carbonate salt.

In the anode compartment, water is oxidised by the positively charged anode to oxygen, protons, and electrons according to equation (1).

$$H_2O \rightarrow 2H^+ + \tfrac{1}{2}O_2 + 2e^- \qquad\qquad (1)$$

Hence, the aqueous fluid is acidified. The acidic aqueous fluid is able to e.g. convert carbonate ions that can give rise to lime scale in gaseous or dissolved carbon dioxide according to equation (2).

$$2H^+ + CO_3^{2-} \rightarrow H_2CO_3 \rightarrow H_2O + CO_2 \qquad\qquad (2)$$

The oxidation process in the anode compartment reduces the concentration of ions that give rise to scale. Therefore, the aqueous fluid exiting the anode compartment can be treated in an efficient manner. The acidic aqueous fluid to be treated that exits the anode compartment can suitably have a pH value in the range of 2-6, preferably in the range of 4-6.

It is possible to allow part of the aqueous fluid to be treated to bypass the anode compartment of the electrochemical cell in order to reduce the energy input required for running the electrochemical cell. The bypass can then e.g. join the acidic aqueous fluid to be treated.

In a special embodiment, a cation exchange membrane is positioned in between the anode and the ion permeable separator. Positively charged protons generated at the anode can then readily pass this membrane, whereas negatively charged ions (such as chlorine ions) cannot pass the membrane. This additional cation exchange membrane is able to prevent chloride transport to the anode and thereby avoid the production of chlorine gas at this electrode.

In accordance with the invention, the treatment can comprise a dewatering technology and/or water treatment technology. It is also possible that the treatment involves other components in the feed than water. Preferably, the treatment comprises one or more selected from the group consisting of osmosis (including advanced non-conventional osmosis processes), reverse osmosis, membrane distillation, electrodialysis, heating, evaporation, boiling, distillation, advanced distillation, absorption, stripping, extraction, pumping, leaching, flotation, washing, dissolution, chemical stabilisation or instabilisation (e.g. by chelation, complexation, reaction), adsorption, ion exchange, drying, crystallisation, filtration and membrane filtration. In a preferred embodiment, the treatment comprises a Memstill® membrane distillation process as described in WO-A-00/72947, which is herewith incorporated by reference. In a further preferred embodiment, the treatment comprises reverse osmosis.

In accordance with this first aspect of the invention, the treatment generates at least treated acidic aqueous fluid. This can, for instance, be a product stream of treated acidic aqueous fluid.

At least part of the acidic treated aqueous fluid is fed into a cathode compartment of the electrochemical cell.

In the cathode compartment, water is reduced by the negatively charged cathode to hydroxide, hydrogen according to equation (3).

$$2e^-+2H_2O \rightarrow 2OH^-+H_2 \qquad (3)$$

Hence, the aqueous fluid is alkalised, i.e. the pH value of the aqueous fluid is increased. In an embodiment, the pH is increased to the same value as the pH of the aqueous fluid feed to be treated. The treated aqueous fluid that exits the cathode compartment can suitably have a pH value in the range of 7-10, preferably in the range of 7-9.

The anode compartment and the cathode compartment of the electrochemical cell are separated by an ion permeable separator (e.g. a membrane or diaphragm), which allows ion transport from the anode compartment to the cathode compartment and *vice versa.* Hence, electrical neutrality can be maintained. The ion permeable separator can, for example, be an anion-exchange membrane, which allows electrical neutrality by migration of negatively charged ions (such as Cl-) to the anode. The ion permeable separator can also be a cation-exchange membrane which allows electrical neutrality by migration of positively charged ions (such as Na$^+$) to the cathode. Further, the ion permeable separator can be any combination of anion-exchange and cation-exchange membranes.

In an embodiment, the electrochemical cell comprises an electrolyte (such as NaCl) in order to increase the conductivity of the aqueous fluid. In addition, the electrolyte may have an additional function. In the case of NaCl, this can for example be a disinfecting function, due to the formation of $HCl/Cl_2$ in the anode compartment.

In an embodiment, gases formed in the anode compartment are removed and/or collected. Such gases can for instance comprise $CO_2$ and/or $Cl_2$. Gaseous $CO_2$ may be formed in the anode compartment according to equation (2) above. The removal of $CO_2$ in accordance with this embodiment can be advantageous, because it can, for instance, reduce or prevent scale formation in the cathode compartment of the electrochemical cell. Gaseous $Cl_2$ may be formed in the anode as a result of electrolysis of Cl-. The removal and/or collection of gases can be performed e.g. by maintaining the electrochemical cell at underpressure, or by flushing the electrochemical cell for example with a nitrogen flow.

In a further aspect the invention is directed to a method for treating an aqueous fluid comprising one or more electrolytes, said method comprising

- supplying at least part of an aqueous fluid feed to be treated into an anode compartment of an electrochemical cell, wherein at the anode water is oxidised to thereby generate acidic aqueous fluid to be treated;
- feeding at least part of the acidic aqueous fluid to be treated into a cathode compartment of the same electrochemical cell, wherein at the cathode water is reduced to thereby generate aqueous fluid to be treated that has a pH which is higher than the acidic aqueous fluid to be treated;
  and
- subjecting at least part of the aqueous fluid to be treated that has a pH which is higher than the acidic aqueous fluid to be treated, to a treatment,

wherein the anode compartment and the cathode compartment of the electrochemical cell are separated by an ion permeable separator.

In accordance with this aspect of the invention, scaling in the cathode compartment can be prevented or at least reduced. The method can be further improved by removing or collecting carbon dioxide from the anode compartment, such as by removing and/or collecting gas generated in anode compartment which gas comprises carbon dioxide. Optionally, the acidic aqueous fluid to be treated which is fed to the cathode compartment may be supplemented with a supply of aqueous fluid feed, which may or may not be the same aqueous fluid feed which is supplied to the anode compartment.

This aspect of the invention is exemplified by the schematic picture in Figure 2. In this picture a aqueous fluid feed to be treated 11 is supplied into an anode compartment 12. Acidic aqueous fluid to be treated 13 exits anode compartment 12 and is introduced into cathode compartment 14. In cathode compartment 14 aqueous fluid to be treated 15 is generated, which has a pH that is higher than the acidic aqueous fluid to be treated 13. The aqueous fluid to be treated 15 is subjected to treatment 16. Anode compartment 12 and cathode compartment 14 are separated by ion permeable separator 17.

The one or more electrolytes are the same as defined above. Also the treatment can be any one of the treatments as mentioned herein.

Further objective of the invention is to provide a method for treating an aqueous fluid wherein the pH of an aqueous fluid feed is temporarily increased, e.g. in order to promote precipitation of salts. The inventors found that this objective can advantageously be met by reversing the direction of the flow of aqueous fluid. Hence, the invention can be employed for the intended precipitation of salts. However, as mentioned above, many other applications can be thought which involve pH sensitive processes, and in which the temporary increase in pH is required or desirable.

Therefore, in a further aspect the invention is directed to a method for treating an aqueous fluid comprising one or more electrolytes, said method comprising:

- supplying at least part of an aqueous fluid feed to be treated into a cathode compartment of an electrochemical cell, wherein at the cathode water is reduced to thereby generate alkaline aqueous fluid to be treated;
- subjecting at least part of the alkaline aqueous fluid to be treated to a treatment, the treatment generating at least treated alkaline aqueous fluid;
- feeding at least part of the treated alkaline aqueous fluid into an anode compartment of the same electrochemical cell, wherein at the anode water is oxidised to thereby generate treated aqueous fluid that has a pH which is lower than the treated alkaline aqueous fluid,

wherein the anode compartment and the cathode compartment of the electrochemical cell are separated by an ion permeable separator, and wherein the aqueous fluid feed has a pH in the range of 6-10, preferably in the range of 7-9, when entering the cathode compartment.

In accordance with this aspect of the invention the pH of an aqueous fluid feed is temporarily increased using a cathode compartment of an electrochemical cell, in order to prepare the aqueous fluid for a specific treatment, such as the deliberate deposition or crystallisation of salts. Thereafter, the pH of the treated aqueous fluid is lowered using an anode compartment of the same electrochemical cell. In order to prevent mixing of fluids in the electrochemical cell and at the same time maintaining electrical neutrality, the anode compartment and the cathode compartment are separated by an ion permeable separator.

In accordance with this aspect of the invention, the treatment can for instance generate one or more streams of treated aqueous fluid of which at least one stream is a stream of treated alkaline aqueous fluid.

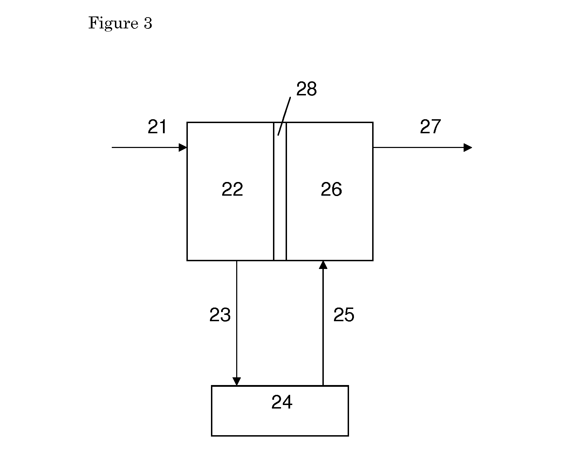

This aspect of the invention is exemplified by the schematic picture in Figure 3. In this picture an aqueous fluid feed to be treated 21 is supplied into a cathode compartment 22. Alkaline aqueous fluid to be treated 23 exits the cathode compartment 22 and is subjected to a treatment 24. After treatment 24, treated alkaline aqueous fluid 25 is introduced into anode compartment 26. Finally, treated aqueous fluid 27 having a pH lower than the treated alkaline aqueous fluid 25 exits the anode compartment 26. Anode compartment 26 and cathode compartment 22 are separated by ion permeable separator 28.

In accordance with this aspect of the invention, when entering the cathode compartment of the electrochemical cell, the aqueous fluid feed has a pH in the range of 7-9. Preferably, substantially no treated alkaline aqueous fluid enters the cathode compartment of the electrochemical cell. In an embodiment, this is 5 wt.% or less of the produced treated alkaline aqueous fluid, more preferably 2 wt.% or less, even more preferably 1 wt.% or less. It is further preferred that substantially the entire aqueous fluid feed is supplied into the cathode. In an embodiment, this is 95 wt.% or more of the aqueous fluid feed, preferably 98 wt.% or more, even more preferably 99 wt.% or more.

In the cathode compartment, water is reduced by the negatively charged cathode to hydroxide and hydrogen according to equation (3) above. Hence, the aqueous fluid is alkalised, i.e. the pH value of the aqueous fluid is increased. The alkaline aqueous fluid to be treated that exits the cathode compartment can suitably have a pH value in the range of 10-14, preferably in the range of 10-12. At such high pH value the solubility of salts is much lower. This may cause precipitation of salts, which can be utilised in the treatment to be employed in combination with this aspect of the invention (e.g. crystallisation in a crystalliser).

In accordance with this aspect of the invention, the treatment generates at least treated alkaline aqueous fluid. This can, for instance, be a product stream of treated alkaline aqueous fluid.

At least part of the treated alkaline aqueous fluid is fed into an anode compartment of the electrochemical cell. In the anode compartment, water is oxidised by the positively charged anode to oxygen, protons, and electrons according to equation (1) above. Hence, the aqueous fluid is acidified, *i.e.* the pH value of the aqueous fluid is decreased. In an embodiment, the pH is decreased to the same value as the pH of the aqueous fluid feed to be treated. The treated aqueous fluid that exits the anode compartment can suitably have a pH value in the range of 7-10, preferably in the range of 7-9.

In a special embodiment of this aspect of the invention, carbon dioxide generated in the anode compartment (for instance according to equation (2) above) is removed from the anode compartment and introduced into the cathode compartment, for instance, in order to further promote precipitation of salts. This can for instance be done by maintaining the electrochemical cell at underpressure, or by flushing the electrochemical cell for example with a nitrogen flow. Alternatively, carbon dioxide from another source can be fed to the cathode compartment in order to promote precipitation of salts. Collected carbon dioxide from the anode compartment can further be utilised in the treatment instead of in the cathode compartment to promote precipitation of salts. Precipitation inside the cathode compartment is in that case limited.

## Claims

1. Method for treating an aqueous fluid comprising one or more electrolytes, said method comprising:

   - supplying at least part of an aqueous fluid feed to be treated into an anode compartment of an electrochemical cell, wherein at the anode water is oxidised to thereby generate acidic aqueous fluid to be treated;
   - subjecting at least part of the acidic aqueous fluid to be treated to a treatment, the treatment generating at least treated acidic aqueous fluid;
   - feeding at least part of the treated acidic aqueous fluid into a cathode compartment of the same electrochemical cell, wherein at the cathode water is reduced to thereby generate treated aqueous fluid that has a pH which is higher than the treated acidic aqueous fluid,

   wherein the anode compartment and the cathode compartment of the electrochemical cell are separated by an ion permeable separator, and wherein the aqueous fluid feed has a pH in the range of 6-10, preferably in the range of 7-9, when entering the anode compartment.

2. Method according to claim 1, wherein substantially no treated acidic aqueous fluid enters the anode compartment of the electrochemical cell.

3. Method for treating an aqueous fluid comprising one or more electrolytes, said method comprising:

   - supplying at least part of an aqueous fluid feed to be treated into an anode compartment of an electrochemical cell, wherein at the anode water is oxidised to thereby generate acidic aqueous fluid to be treated;
   - feeding at least part of the acidic aqueous fluid to be treated into a cathode compartment of the same electrochemical cell, wherein at the cathode water is reduced to thereby generate aqueous fluid to be treated that has a pH which is higher than the acidic aqueous fluid to be treated; and
   - subjecting at least part of the aqueous fluid to be treated that has a pH which is higher than the acidic aqueous fluid to be treated, to a treatment;

   wherein the anode compartment and the cathode compartment of the electrochemical cell are separated by an ion permeable separator.

4. Method according to claim 3, wherein

   - a first part of the aqueous fluid feed to be treated is supplied to the anode compartment, and
   - a second part of the aqueous fluid feed to be treated is supplied into the cathode compartment, together with at least part of the acidic aqueous fluid to be treated.

5. Method according to any one of claims 1-3, wherein substantially the entire aqueous fluid feed is supplied into the anode.

6. Method according to any one of claims 1-5, wherein said electrochemical cell comprises an electrolyte, such as NaCl.

7. Method according to any one of claims 1-6, wherein gas formed in the anode is collected, preferably said gas comprises carbon dioxide and/or chlorine.

**8.** Method according to any one of claims 7, wherein said electrochemical cell is kept at underpressure or wherein said electrochemical cell is flushed.

**9.** Method according to any one of claims 1-8, wherein said treatment comprises one or more selected from the group consisting of osmosis, reverse osmosis, membrane distillation, electrodialysis, heating, evaporation, boiling, distillation, advanced distillation, absorption, stripping, extraction, pumping, leaching, flotation, washing, dissolution, chemical stabilisation or instabilisation, adsorption, ion exchange, drying, crystallisation, filtration and membrane filtration.

**10.** Method according to any one of claims 1-7, wherein the acidic aqueous fluid to be treated has a pH in the range of 2-6, preferably in the range of 4-6.

**11.** Method for treating an aqueous fluid comprising one or more electrolytes, said method comprising:

- supplying at least part of an aqueous fluid feed to be treated into a cathode compartment of an electrochemical cell, wherein at the cathode water is reduced to thereby generate alkaline aqueous fluid to be treated;
- subjecting at least part of the alkaline aqueous fluid to be treated to a treatment, the treatment generating at least treated alkaline aqueous fluid;
- feeding at least part of the treated alkaline aqueous fluid into an anode compartment of the same electrochemical cell, wherein at the anode water is oxidised to thereby generate treated aqueous fluid that has a pH which is lower than the treated alkaline aqueous fluid,

wherein the anode compartment and the cathode compartment of the electrochemical cell are separated by an ion permeable separator, and wherein the aqueous fluid feed has a pH in the range of 6-10, preferably in the range of 7-9, when entering the cathode compartment.

**12.** Method according to claim 11, wherein substantially all of said aqueous fluid feed to be treated is supplied into the cathode.

**13.** Method according to claim 11 or 12, wherein substantially no treated alkaline aqueous fluid enters the anode compartment of the electrochemical cell.

**14.** Method according to any one of claims 11-13, wherein said treatment comprises precipitation of salts, preferably carbonate salts.

**15.** Method according to any one of claims 11-14, wherein said alkaline aqueous fluid to be treated has a pH in the range of 10-14, preferably in the range of 10-12.

**16.** Method according to any one of claims 11-15, wherein $CO_2$ is fed to the cathode compartment, said $CO_2$ preferably being generated in the anode compartment.

**17.** Method according to any one of claims 1-16, wherein said one or more electrolytes comprise one or more selected from a carbonate salt, a bicarbonate salt, a hydroxide salt, a halogenite, a hypochlorite ion, an oxide, a hydride, a sulphate salt, a bisulphate salt, a sulphite salt, a sulphide, a nitrate, a nitrite, hydrogen phosphate, dihydrogen phosphate, trihydrogen phosphate, cyanurate ions, actinide ions, hydrogen fluoride, hydrogen chloride, hypochlorous acid, hydrochloric acid, formic acid, acetic acid, propionic acid, cyanuric acid, benzoic acid, oxalic acid, ammonia, phenol or derivatives thereof.

Figure 1

Figure 2

Figure 3

Europäisches
Patentamt

European
Patent Office

Office européen
des brevets

# EUROPEAN SEARCH REPORT

Application Number

EP 10 15 1204

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/205162 A1 (KAMITANI YOSHINORI [JP]) 6 September 2007 (2007-09-06) | 1,3,11 | INV.<br>C02F5/00 |
| Y | * paragraphs [0024], [0025], [0033]; claims 1,3,5,7; figure 2 * | 1-17 | C02F1/46<br>C02F1/44<br>C02F1/42 |
| X | US 5 985 110 A (BAKHIR VITOLD M [RU] ET AL) 16 November 1999 (1999-11-16) | 11 | C02F1/24<br>C02F1/26 |
| Y | * column 4, line 48 - column 6, line 30; claims 1,2,3,4; figures 1,2,4 * | 1-17 | C02F1/28<br>C02F1/04<br>C02F1/467 |
| Y | US 5 997 717 A (MIYASHITA KOHICHI [JP] ET AL) 7 December 1999 (1999-12-07)<br>* column 2, line 24 - column 3, line 19; claim 15; figures 3,4 * | 1-17 | C25B1/10<br>C02F1/461<br><br>ADD.<br>C02F103/02 |
| Y | EP 0 642 824 A1 (MONTETITANO S A [SM]) 15 March 1995 (1995-03-15)<br>* claims 1,3,12,15; figures 1,6 * | 1-17 | |
| Y | WO 03/037802 A1 (KANG SONGSIK [KR]) 8 May 2003 (2003-05-08)<br>* page 3, line 25 - page 4, line 16; figure 1 * | 11 | TECHNICAL FIELDS SEARCHED (IPC)<br><br>C02F<br>C25B |
| A | US 5 833 831 A (KITAJIMA HIROSHI [JP] ET AL) 10 November 1998 (1998-11-10)<br>* figure 2 * | 1-17 | B01D |
| A | US 2008/093213 A1 (YAMAMOTO TETSUYA [JP] ET AL) 24 April 2008 (2008-04-24)<br>* claims 1-4; figures 8,9 * | 1-17 | |
| A,D | US 2009/071843 A1 (MIYASHITA KOHICHI [JP] ET AL) 19 March 2009 (2009-03-19)<br>* claims 1-8; figure 1 * | 1-17 | |
| A,D | EP 0 839 762 A2 (EBARA CORP [JP]) 6 May 1998 (1998-05-06)<br>* claims 1-10; figures 1,2 * | 1-17 | |

The present search report has been drawn up for all claims

| Place of search | Date of completion of the search | Examiner |
|---|---|---|
| Munich | 21 May 2010 | Van Iddekinge, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 15 1204

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2010

| Patent document cited in search report | | Publication date | Patent family member(s) | | Publication date |
|---|---|---|---|---|---|
| US 2007205162 | A1 | 06-09-2007 | JP | 2005329331 A | 02-12-2005 |
| US 5985110 | A | 16-11-1999 | NONE | | |
| US 5997717 | A | 07-12-1999 | CN | 1181977 A | 20-05-1998 |
| | | | DE | 69718877 D1 | 13-03-2003 |
| | | | DE | 69718877 T2 | 18-06-2003 |
| | | | EP | 0841305 A2 | 13-05-1998 |
| | | | TW | 450945 B | 21-08-2001 |
| EP 0642824 | A1 | 15-03-1995 | CA | 2129775 A1 | 15-03-1995 |
| | | | SK | 99293 A3 | 12-04-1995 |
| WO 03037802 | A1 | 08-05-2003 | CN | 1608033 A | 20-04-2005 |
| | | | JP | 3820248 B2 | 13-09-2006 |
| | | | JP | 2005507314 T | 17-03-2005 |
| | | | KR | 20030037063 A | 12-05-2003 |
| US 5833831 | A | 10-11-1998 | NONE | | |
| US 2008093213 | A1 | 24-04-2008 | CN | 101224917 A | 23-07-2008 |
| | | | EP | 1914206 A1 | 23-04-2008 |
| | | | JP | 4198169 B2 | 17-12-2008 |
| | | | JP | 2008100191 A | 01-05-2008 |
| | | | KR | 20080035957 A | 24-04-2008 |
| US 2009071843 | A1 | 19-03-2009 | CA | 2639613 A1 | 19-03-2009 |
| | | | CN | 101391827 A | 25-03-2009 |
| | | | GB | 2453050 A | 25-03-2009 |
| | | | IE | 20080695 A1 | 08-07-2009 |
| | | | JP | 2009072659 A | 09-04-2009 |
| | | | KR | 20090030232 A | 24-03-2009 |
| EP 0839762 | A2 | 06-05-1998 | DE | 69727114 D1 | 12-02-2004 |
| | | | DE | 69727114 T2 | 30-09-2004 |
| | | | JP | 10128338 A | 19-05-1998 |
| | | | US | 5837124 A | 17-11-1998 |

EPO FORM P0459

For more details about this annex : see Official Journal of the European Patent Office, No. 12/82

**EP 2 348 000 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20090071843 A
- EP 0839762 A
- WO 0072947 A